# EUROPÄISCHE PATENTSCHRIFT

(11) **EP 3 233 992 B1**
(45) Veröffentlichungstag und Bekanntmachung des Hinweises auf die Patenterteilung: **20.02.2019**
(21) Anmeldenummer: 15807841.0
(22) Anmeldetag: 04.12.2015
(51) Int. Cl.: C08J 9/224, C08L 67/04

(54) **VERFAHREN ZUR HERSTELLUNG VON EXPANDIERBAREN POLYMILCHSÄURE-HALTIGEN GRANULATEN**
VERFAHREN ZUR HERSTELLUNG VON EXPANDIERBAREN POLYMILCHSÄURE-HALTIGEN GRANULATEN
PROCÉDÉ DE PRÉPARATION DE GRANULÉS EXPANSIBLES CONTENANT DE L'ACIDE POLYLACTIQUE

(30) Priorität: 17.12.2014 EP 14198430
(43) Veröffentlichungstag der Anmeldung: 25.10.2017
(73) Patentinhaber: BASF SE, 67056 Ludwigshafen am Rhein (DE)
(72) Erfinder: LOHMANN, Jerome, 76829 Landau (DE); SAMPATH, Bangaru Dharmapuri Sriramulu, 67063 Ludwigshafen (DE); GUTMANN, Peter, 76199 Karlsruhe (DE)
(74) Vertreter: BASF IP Association
(86) Internationale Anmeldenummer: PCT/EP2015/078689
(87) Internationale Veröffentlichungsnummer: WO 2016/096481

(56) Entgegenhaltungen:
- WO-A1-2012/138282
- WO-A2-2008/130226
- WO-A2-2011/086030

## Beschreibung

Die Erfindung betrifft ein Verfahren zur Herstellung von expandierbaren Polymilchsäure-haltigen Granulaten mit einer Schüttdichte von 500 bis 800 kg/m³, umfassend die Schritte:
a) Aufschmelzen und Einmischen der Komponenten i) 59.9 bis 79,9 Gew.-%, bezogen auf das Gesamtgewicht der Komponenten i bis iii, Polymilchsäure, ii) 20 bis 40 Gew.-%, bezogen auf das Gesamtgewicht der Komponenten i bis iii, eines Polybutylensuccinats, Polybutylensuccinat-coadipats, Polybutylensuccinat-cosebacats, Polybutylenadipat-coterephthalats oder Polybutylensebacat-coterephthalats iii) 0,1 bis 2 Gew.-%, bezogen auf das Gesamtgewicht der Komponenten i bis iii, eines Kettenverlängerers und iv) 0 bis 10 Gew.-%, bezogen auf das Gesamtgewicht der Komponenten i bis iii, eines oder mehrerer Additive,
b) Einmischen v) 3 bis 7 Gew.-%, bezogen auf das Gesamtgewicht der Komponenten i bis iv, eines physikalischen Treibmittels in die Polymerschmelze mittels eines statischen oder dynamischen Mischers bei einer Temperatur von mindestens 140°C,
c) Austrag durch eine Düsenplatte mit Bohrungen, deren Durchmesser am Düsenaustritt höchstens 1,5 mm beträgt und
d) Granulieren der treibmittelhaltigen Schmelze direkt hinter der Düsenplatte unter Wasser bei einem Druck im Bereich von 1 bis 25 bar und
e) Beschichten der so erhaltenen Granulate vi) mit 0,1 bis 0,45 Gew.-%, bezogen auf das Gesamtgewicht der Granulate, amorpher Polymilchsäure, die mittels einer wässrigen Dispersion auf die Granulate aufgebracht wird.

Weiterhin betrifft die Erfindung expandierbare Polymilchsäure-haltige Granulate erhältlich nach diesem Verfahren und daraus hergestellte Formteile.

Verfahren zur Herstellung von expandierbaren Polymilchsäure-haltigen Granulaten (Polymilchsäure-haltige Partikelschäume) sind in WO 01/012706 in allgemeiner Form beschrieben, wobei weder auf die spezielle Polymilchsäuremischung (siehe Komponenten i) bis iv) in Schritt a) noch auf die vorteilhafte Fahrweise via druckbeaufschlagten Unterwassergranulierung (siehe die erfindungsgemäßen Schritte c) bis e) hingewiesen wird. Dieses Verfahren führt in weiten Bereichen nicht zu reproduzierbaren Partikelschäumen und verhindert insbesondere nicht das vorzeitige Aufschäumen der expandierbaren Granulate.

Ein verbessertes Verfahren zur Herstellung von expandierbaren Polymilchsäure-haltigen Granulaten wird in der WO 2011/086030 beschrieben. Allerdings lassen sich die mit diesem Verfahren hergestellten Schaumpartikel im Formteil nicht so gut verschweißen.

WO 08/130226 beschreibt ein aufwendiges, vielstufiges Verfahren zur Herstellung von expandierbaren Polymilchsäure-haltigen Granulaten, in der die Polymilchsäurepartikel beschichtet werden und dann mit Kohlendioxid nachimprägniert werden bzw. die Partikel mit Kohlendioxid nachimprägniert werden und dann beschichtet werden. Die Nachimprägnierung mit Kohlendioxid führt weiterhin zu vorgeschäumten Partikeln, die eine ganz andere Technologie für die Weiterverarbeitung der Partikelschäume nach sich zieht. In der WO 08/130226 wird auch eine Beschichtung mit insbesondere Polyvinylacetat beschrieben um ein verbessertes Verschweißen der Polymilchsäure-Schaumperlen im Formteil zu erreichen. Dieses Verfahren verlangt jedoch wesentlich höhere Mengen an Beschichtungsmittel.

Aufgabe der vorliegenden Erfindung war es, ein einfaches, prozessfähiges Verfahren zur Herstellung von expandierbaren Polymilchsäure-haltigen Granulaten mit kleiner Granulatgröße und einheitlicher Granulatgrößenverteilung bereitzustellen, die sich anschließend im Formteil gut verschweißen lassen.

Demgemäß wurde das eingangs beschriebene Verfahren gefunden.

Im Folgenden wird das erfindungsgemäße Verfahren näher beschrieben.

Das Polymilchsäure-haltige Polymer, das in Stufe a) eingesetzt wird, ist in der Regel eine Mischung aus:
i) 59,9 bis 79,9 Gew.-%, bezogen auf das Gesamtgewicht der Komponenten i bis iii, Polymilchsäure,
ii) 20 bis 40 Gew.-%, bezogen auf das Gesamtgewicht der Komponenten i bis iii, mindestens eines Polybutylensuccinats, Polybutylensuccinat-coadipats, Polybutylensuccinat-cosebacats, Polybutylenadipat-coterephthalats oder Polybutylensebacat-coterephthalats,
iii) 0,1 bis 2 Gew.-%, bezogen auf das Gesamtgewicht der Komponenten i bis iii, eines Kettenverlängerers, und
iv) 0 bis 10 Gew.-%, bezogen auf das Gesamtgewicht der Komponenten i bis iii, eines oder mehrerer Additive

Vorzugsweise besteht das Polymilchsäure-haltige Polymer aus einer Mischung, enthaltend:
i) 59,9 bis 79,9 Gew.-%, bezogen auf das Gesamtgewicht der Komponenten i bis iii, Polymilchsäure,
ii) 20 bis 40 Gew.-%, bezogen auf das Gesamtgewicht der Komponenten i bis iii, eines Polyesters ii enthaltend:
   a) 90 bis 100 mol %, bezogen auf die Komponenten a und b, Bernsteinsäure;
   b) 0 bis 10 mol %, bezogen auf die Komponenten a und b, Adipinsäure oder Sebazinsäure;
   c) 98 bis 102 mol %, bezogen auf die Komponenten a und b, 1,4-Butandiol; und
   d) 0,00 bis 2 Gew.-%, bezogen auf das Gesamtgewicht der Komponenten a bis c, eines Kettenverlängerers und /oder Verzweigers ausgewählt aus der Gruppe bestehend aus: einem di oder polyfunktionellen Isocyanat, Isocyanurat, Oxazolin , Epoxid, Peroxid, Carbonsäureanhydrid und /oder eines mindestens trifunktionellen Alkohols oder einer mindestens trifunktionellen Carbonsäure.
iii) 0,1 bis 2 Gew.-%, insbesondere bevorzugt 0,1 bis 1 Gew.-%, bezogen auf das Gesamtgewicht der Komponenten i bis iii, eines Epoxidgruppen-haltigen Copolymers auf Basis Styrol, Acrylsäureester und/oder Methacrylsäureester, und
iv) 0.1 bis 1 Gew.-%, insbesondere bevorzugt 0,1 bis 0,5 Gew.-%, bezogen auf das Gesamtgewicht der Komponenten i bis iii, eines Nukleierungsmittels.

Als Komponente i) wird Polymilchsäure mit dem folgenden Eigenschaftsprofil bevorzugt eingesetzt:
- einer Schmelzvolumenrate (MVR bei 190° C und 2.16 kg nach ISO 1133 von 0.5 bis 15 bevorzugt 1 bis 9, besonders bevorzugt 2 bis 8 ml/10 Minuten)
- einem Schmelzpunkt unter 180° C;
- einem Glaspunkt (Tg) größer 40°C
- einem Wassergehalt von kleiner 1000 ppm
- einem Monomeren-Restgehalt (Lactid) von kleiner 0.3%.
- einem Molekulargewicht von größer 50 000 Dalton.

Bevorzugte Polymilchsäuren sind beispielsweise von NatureWorks das Ingeo® 2002 D, 4032 D, 4042 D und 4043 D, 8251 D, 8052 D, 3251 D und insbesondere 8051 D sowie 8052 D. Ingeo® 8051 D und 8052 D sind Polymilchsäuren der Fa. NatureWorks, mit den folgenden Produkteigenschaften: Tg: 65,3°C, Tm: 153,9°C, MVR: 6,9 [ml/10 Minuten], M_{w}:186000, Mn:107000. Weiterhin weisen diese Produkte eine etwas höhere Säurezahl auf.

Für die Herstellung der erfindungsgemäßen expandierbaren Granulate haben sich insbesondere Polymilchsäuren mit einer MVR nach ISO 1133 [190°C/2,16 kg] von 5 bis 8 ml/10 Minuten als vorteilhaft erweisen.

Als Komponente ii) sind die aliphatischen Polyester Polybutylensuccinat (PBS), Polybutylensuccinatadipat (PBSA) oder Polybutylensuccinatsebacat (PBSSe) geeignet. Die aliphatischen Polyester werden beispielsweise von den Firmen Showa Highpolymers unter dem Namen Bionolle und von Mitsubishi unter dem Namen GSPIa vermarktet. Neuere Entwicklungen sind in der WO2010/034711 beschrieben.

Die aliphatischen Polyester weisen in der Regel Viskositätszahlen nach DIN 53728 von 150 bis 320 cm³/g und vorzugsweise 150 bis 250 cm³/g auf.
Der MVR (Schmelzvolumenrate) nach EN ISO 1133 (190°C, 2,16 kg Gewicht) liegt im Allgemeinen bei 0,1 bis 70, bevorzugt bei 0,8 bis 70 und insbesondere bei 1 bis 60 cm³/10 min.
Die Säurezahlen nach DIN EN 12634 liegen im Allgemeinen bei 0,01 bis 1,2 mg KOH/g, vorzugsweise bei 0,01 bis 1,0 mg KOH/g und insbesondere bevorzugt bei 0,01 bis 0,7 mg KOH/g.

Als Komponente ii) sind auch aliphatisch-aromatische Polyester wie beispielsweise Polybutylenadipat-coterephthalat oder Polybutylensebacat-coterephthalat in Frage, die wie die zuvor aufgeführten aliphatischen Polyester biologisch abbaubar nach DIN EN 13432 sind.

Die biologisch abbaubaren Polyester ii können weitere dem Fachmann bekannte, aber nicht erfindungswesentliche Inhaltsstoffe enthalten. Beispielsweise die in der Kunststofftechnik üblichen Zusatzstoffe wie Stabilisatoren; Nukleierungsmittel; Gleit- und Trennmittel wie Stearate (insbesondere Calziumstearat); Weichmacher (Plastifizierer) wie beispielsweise Zitronensäureester (insbesondere Acetyl-tributylcitrat), Glycerinsäureester wie Triacetylglycerin oder Ethylenglykolderivate, Tenside wie Polysorbate, Palmitate oder Laurate; Wachse wie beispielsweise Bienenwachs oder Bienenwachsester; Antistatikum, UV-Absorbers; UV-Stabilisators; Antifog-Mittel oder Farbstoffe. Die Additive werden in Konzentrationen von 0 bis 5 Gew.-%, insbesondere 0,1 bis 2 Gew.-% bezogen auf die erfindungsgemäßen Polyester eingesetzt. Weichmacher können in 0,1 bis 10 Gew.-% in den erfindungsgemäßen Polyestern enthalten sein.

Komponente iii) wird im Folgenden näher beschrieben.

Unter Epoxiden wird insbesondere Epoxidgruppen-haltiges Copolymer auf Basis Styrol, Acrylsäureester und/oder Methacrylsäureester verstanden. Die Epoxidgruppen tragenden Einheiten sind vorzugsweise Glycidyl(meth)acrylate. Als vorteilhaft haben sich Copolymere mit einem Glycidylmethacrylat-Anteil von größer 20, besonders bevorzugt von größer 30 und insbesondere bevorzugt von größer 50 Gew.-% des Copolymers erwiesen. Das Epoxid-Äquivalentgewicht (EEW) in diesen Polymeren beträgt vorzugsweise 150 bis 3000 und insbesondere bevorzugt 200 bis 500 g/Äquivalent. Das mittlere Molekulargewicht (Gewichtsmittel) M_{W} der Polymere beträgt vorzugsweise 2000 bis 25.000, insbesondere 3000 bis 8.000. Das mittlere Molekulargewicht (Zahlenmittel) Mₙ der Polymere beträgt vorzugsweise 400 bis 6.000, insbesondere 1000 bis 4.000. Die Polydispersität (Q) liegt im Allgemeinen zwischen 1.5 und 5. Epoxidgruppen-haltige Copolymere des obengenannten Typs werden beispielsweise von der BASF Resins B.V. unter der Marke Joncryl® ADR vertrieben. Als Kettenverlängerer besonders geeignet ist Joncryl® ADR 4368.

Unter Komponente iv wird insbesondere eines oder mehrere der folgenden Additive verstanden: Stabilisator, Nukleierungsmittel, Gleit- und Trennmittel, Tensid, Wachs, Antistatikum, Antifog-Mittel, Farbstoff, Pigment, UV-Absorber, UV-Stabilisator oder sonstigen Kunststoffadditiv. Insbesondere bevorzugt ist wie bereits erwähnt der Einsatz von 0,5 bis 1 Gew.-% bezogen auf die Komponenten i und ii eines Nukleierungsmittels.

Unter Nukleierungsmittel wird insbesondere Talkum, Kreide, Ruß, Graphit, Calcium- oder Zinkstearat, Poly-D-Milchsäure, N,N'-ethylen-bis-12-hydroxystearamid oder Polyglykolsäure verstanden: Besonders bevorzugt ist Talkum als Nukleierungsmittel.

Das Treibmittel kann als weitere Komponente va aufgefasst werden.

Die treibmittelhaltige Polymerschmelze enthält in der Regel eine oder mehrere Treibmittel in homogener Verteilung in einem Anteil von insgesamt 2 bis 10 Gew.-% bevorzugt 3 bis 7 Gew.-%, bezogen auf die treibmittelhaltige Polymerschmelze. Als Treibmittel, eignen sich die üblicherweise in EPS eingesetzten physikalischen Treibmittel, wie aliphatische Kohlenwasserstoffe mit 2 bis 7 Kohlenstoffatomen, Alkohole, Ketone, Ether, Amide oder halogenierte Kohlenwasserstoffe. Bevorzugt wird iso-Butan, n-Butan, n-Pentan und insbesondere iso-Pentan eingesetzt. Weiterhin bevorzugt sind Gemische aus n-Pentan und iso-Pentan.

Die zugesetzte Treibmittelmenge wird so gewählt, dass die expandierbaren Granulate ein Expansionsvermögen α, definiert als Schüttdichte vor dem Vorschäumen von 500 bis 800 und vorzugsweise 580 bis 750 kg/m³ und eine Schüttdichte nach dem Vorschäumen höchstens von 125 bevorzugt 8 bis 100 kg/m³ aufweisen.

Bei Verwendung von Füllstoffen können in Abhängigkeit von der Art und Menge des Füllstoffes Schüttdichten im Bereich von 590 bis 1200 kg/m³ auftreten.

Des Weiteren können der Polymerschmelze Additive, Keimbildner, Füllstoffe, Weichmacher, Flammschutzmittel, lösliche und unlösliche anorganische und/oder organische Farbstoffe und Pigmente, z.B. IR-Absorber, wie Ruß, Graphit oder Aluminiumpulver gemeinsam oder räumlich getrennt, z.B. über Mischer oder Seitenextruder zugegeben werden. In der Regel werden die Farbstoffe und Pigmente in Mengen im Bereich von 0,01 bis 10, bevorzugt im Bereich von 1 bis 5 Gew.-% zugesetzt. Zur homogenen und mikrodispersen Verteilung der Pigmente in dem Polymer kann es insbesondere bei polaren Pigmenten zweckmäßig sein ein Dispergierhilfsmittel, z.B. Organosilane, epoxygruppenhaltige Polymere oder Maleinsäureanhydrid-gepfropfte Polymere, einzusetzen. Bevorzugte Weichmacher sind Mineralöle, Phthalate, die in Mengen von 0,05 bis 10 Gew.-%, bezogen auf das Polymerisat, eingesetzt werden können.

Schließlich wird in Stufe e) zur Beschichtung 0,1 bis 0,45 Gew.-%, bezogen auf das Gesamtgewicht der Granulate, amorphe Polymilchsäure eingesetzt, die als Komponente vi) aufgefasst werden kann. Amorphe Polymilchsäure weist einen höheren Anteil an D-Milchsäure auf als semikristalline Polymichsäure, die üblicherweise einen L-Milchsäureanteil von größer 90 % und insbesondere größer 95 % hat. Amorphe Polymilchsäure hat in der Regel einen Anteil an D-Milchsäure von größer 10 und insbesondere von größer 12 %. Eine besonders geeignete amorphe Polymilchsäure ist von NatureWorks unter dem Handelsnamen Ingeo® 4060D mit einem D-Polymilchsäureanteil von 11 bis 13 % erhältlich.

Zur Herstellung der erfindungsgemäßen expandierbaren Granulate wird das Treibmittel in die Polymerschmelze eingemischt. Das Verfahren umfasst die Stufen A) Schmelzerzeugung, B) Mischen C) Fördern und D) Granulieren. Jede dieser Stufen kann durch die in der Kunststoffverarbeitung bekannten Apparate oder Apparatekombinationen ausgeführt werden. Zur Einmischung eignen sich statische oder dynamische Mischer, beispielsweise Extruder. Die Polymerschmelze kann direkt durch Aufschmelzen von Polymergranulaten erzeugt werden. Bei Bedarf kann die Schmelzetemperatur über einen Kühler abgesenkt werden. Für die Granulierung kommen beispielsweise die druckbeaufschlagte Unterwassergranulierung, Granulierung mit rotierenden Messern und Kühlung durch Sprühvernebelung von Temperierflüssigkeiten, in Betracht. Zur Durchführung des Verfahrens geeignete Apparateanordnungen sind z.B.:
i) Extruder - statischer Mischer - Kühler - Granulator
ii) Extruder - Granulator

Weiterhin kann die Anordnung einen Seitenextruder zur Einbringung von Additiven, z.B. von Feststoffen oder thermisch empfindlichen Zusatzstoffen aufweisen.

Die treibmittelhaltige Polymerschmelze wird in der Regel mit einer Temperatur im Bereich von 140 bis 300°C, bevorzugt im Bereich von 160 bis 240°C durch die Düsenplatte gefördert.

Die Düsenplatte wird mindestens auf die Temperatur der treibmittelhaltigen Polymerschmelze beheizt. Bevorzugt liegt die Temperatur der Düsenplatte im Bereich von 20 bis 100°C über der Temperatur der treibmittelhaltigen Polymerschmelze. Dadurch werden Polymerablagerungen in den Düsen verhindert und eine störungsfreie Granulierung gewährleistet.

Um marktfähige Granulatgrößen zu erhalten sollte der Durchmesser (D) der Düsenbohrungen am Düsenaustritt im Bereich von 0,1 bis 2 mm, bevorzugt im Bereich von 0,1 bis 1,2 mm, besonders bevorzugt im Bereich von 0,1 bis 0,8 mm liegen. Damit lassen sich auch nach Strangaufweitung Granulatgrößen unter 2 mm, insbesondere im Bereich 0,2 bis 1,4 mm gezielt einstellen.

Die Strangaufweitung kann außer über die Molekulargewichtsverteilung durch die Düsengeometrie beeinflusst werden. Die Düsenplatte weist bevorzugt Bohrungen mit einem Verhältnis L/D von mindestens 2 auf, wobei die Länge (L) den Düsenbereich, dessen Durchmesser höchstens dem Durchmesser (D) am Düsenaustritt entspricht, bezeichnet. Bevorzugt liegt das Verhältnis L/D im Bereich von 3 - 20.

Im Allgemeinen sollte der Durchmesser (E) der Bohrungen am Düseneintritt der Düsenplatte mindestens doppelt so groß wie der Durchmesser (D) am Düsenaustritt sein.

Eine Ausführungsform der Düsenplatte weist Bohrungen mit konischem Einlauf und einem Einlaufwinkel α kleiner 180°, bevorzugt im Bereich von 30 bis 120° auf. In einer weiteren Ausführungsform besitzt die Düsenplatte Bohrungen mit konischem Auslauf und einen Auslaufwinkel β kleiner 90°, bevorzugt im Bereich von 15 bis 45°. Um gezielte Granulatgrößenverteilungen der Polymeren zu erzeugen kann die Düsenplatte mit Bohrungen unterschiedlicher Austrittsdurchmesser (D) ausgerüstet werden. Die verschiedenen Ausführungsformen der Düsengeometrie können auch miteinander kombiniert werden.

Weiterhin wurde gefunden, dass eine Absenkung der Temperatur bei der Unterwassergranulierung auf 5 bis 20 °C zu expandierbaren Polymilchsäure-haltigen Granulaten mit definierten Hohlräumen mit einem mittleren Durchmesser im Bereich von 0,1 bis 50 µm führt. In der Regel weisen die Granulate einen mittleren Durchmesser im Bereich von 0,1 bis 2 mm und 50 bis 300 Hohlräume/mm² Querschnittsfläche auf. Durch die Absenkung der Temperatur bei der Unterwassergranulierung kann die Schüttdichte der auf den Bereich von 580 bis 750 kg/m³ und vorzugsweise 580 bis 720kg/m³ verringert werden. Weiterhin weisen die so hergestellten expandierbaren Polymilchsäure-haltigen Granulate eine erhöhte Lagerstabilität auf. Sie können noch nach Wochen problemlos aufgeschäumt werden.

Die Verringerung der Schüttdichte und Erhöhung der Lagerstabilität der expandierbaren Polymilchsäure-haltigen Granulate mit einer Schüttdichte von 500 bis 800 kg/m³ lässt sich auch mit der folgenden bevorzugten Fahrweise erreichen:
a) Aufschmelzen und Einmischen der Komponenten i) 59.9 bis 79,9 Gew.-%, bezogen auf das Gesamtgewicht der Komponenten i bis iii, Polymilchsäure, ii) 20 bis 40 Gew.-%, bezogen auf das Gesamtgewicht der Komponenten i bis iii, eines Polybutylensuccinats, Polybutylensuccinat-coadipats oder Polybutylensuccinat-cosebacats iii) 0,1 bis 2 Gew.-%, bezogen auf das Gesamtgewicht der Komponenten i bis iii, eines Kettenverlängerers und iv) 0 bis 10 Gew.-%, bezogen auf das Gesamtgewicht der Komponenten i bis iii, eines oder mehrerer Additive,
b) Einmischen va) 1 bis 7 Gew.-%, bezogen auf das Gesamtgewicht der Komponenten i bis iv, eines organischen Treibmittels und vb) 0,01 bis 5 Gew.-% eines Co-Treibmittels - ausgewählt aus der Gruppe Stickstoff, Kohlendioxid, Argon, Helium oder Mischungen davon - in die Polymerschmelze gegebenenfalls mittels eines statischen oder dynamischen Mischers bei einer Temperatur von mindestens 140°C,
c) Austrag durch eine Düsenplatte mit Bohrungen, deren Durchmesser am Düsenaustritt höchstens 1,5 mm beträgt und
d) Granulieren der treibmittelhaltigen Schmelze direkt hinter der Düsenplatte unter Wasser bei einem Druck im Bereich von 1 bis 25 bar; und
e) Beschichten der so erhaltenen Granulate vi) mit 0,1 bis 0,45 Gew.-%, bezogen auf das Gesamtgewicht der Granulate, amorpher Polymilchsäure, die mittels einer wässrigen Dispersion auf die Granulate aufgebracht wird.

Durch die Verwendung von flüchtigen, flüssigen / gasförmigen Hohlräume bildende Co-Treibmittel vb) eine zelluläre Struktur in den expandierbaren Granulaten eingestellt werden kann, mit deren Hilfe der späteren Schäumvorgang verbessert und die Zellgröße kontrolliert werden kann.

Als Nukleierungsmittel iv) und Treibmittel va) eignen sich die zuvor beschriebenen Mittel.

Der Verfahren zur Einstellung dieser Hohlraum-Morphologie kann auch als Vornukleierung bezeichnet werden, wobei die Hohlräume im Wesentlichen durch das Co-Treibmittel vb) gebildet werden.

Das die Hohlräume bildende Co-Treibmittel vb) unterscheidet sich vom eigentlichen Treibmittel v in dessen Löslichkeit im Polymeren. Bei der Herstellung werden zunächst Treibmittel va) und Co-Treibmittel vb) im Polymeren bei ausreichend hohem Druck vollständig gelöst. Anschließend wird der Druck reduziert, vorzugsweise innerhalb kurzer Zeit, und somit die Löslichkeit des Co-Treibmittel vb) reduziert. Dadurch stellt sich eine Phasenseparation in der polymeren Matrix ein und eine vornukleierter Struktur entsteht. Das eigentliche Treibmittel va) bleibt aufgrund dessen höherer Löslichkeit und / oder dessen geringer Diffusionsgeschwindigkeit überwiegend im Polymeren gelöst. Simultan zur Druckreduzierung wird vorzugsweise eine Temperaturreduktion durchgeführt, um eine zu starke Nukleierung des Systems zu verhindern und ein Ausdiffundieren des eigentlichen Treibmittels va) zu verringern. Erreicht wird dies durch Co-Treibmittel vb) in Verbindung mit optimalen Granulierbedingungen.

Bevorzugt entweicht das Co-Treibmittel vb) zu mindestens 80 Gew.-% innerhalb von 24 h aus den expandierbaren thermoplastischen Partikeln bei einer Lagerung bei 25°C, Normaldruck und 50% relativer Feuchtigkeit. Die Löslichkeit des Co-Treibmittels vb) in den expandierbaren thermoplastischen Partikeln liegt bevorzugt unter 0,1 Gew.-%

In allen Fällen sollte die zugegebene Menge des eingesetzten Co-Treibmittels vb) bei der Vornukleierung die maximale Löslichkeit bei den vorliegenden Prozessbedingungen überschreiten. Daher werden bevorzugt Co-Treibmittel vb) eingesetzt, die eine geringe, aber ausreichende Löslichkeit im Polymeren aufweisen. Dazu zählen insbesondere Gase wie Stickstoff, Kohlendioxid, Luft oder Edelgase, besonders bevorzugt Stickstoff, dessen Löslichkeit in vielen Polymeren sich bei niedrigen Temperaturen und Drücken verringert. Es sind aber auch andere flüssige Additive vorstellbar.

Besonders bevorzugt werden inerte Gase wie Stickstoff und Kohlendioxid eingesetzt. Beide Gase zeichnen sich neben ihren geeigneten physikalischen Eigenschaften durch geringe Kosten, gute Verfügbarkeit, einfache Handhabbarkeit und reaktionsträges bzw. inertes Verhaltes aus. Beispielsweise findet in Gegenwart der beiden Gase in nahezu allen Fällen keine Degradation des Polymeren statt. Da die Gase selbst aus der Atmosphäre gewonnen werden, besitzen sie zudem ein umweltneutrales Verhalten.

Die eingesetzte Menge des Co-Treibmittel vb) sollte dabei: (a) hinreichend klein sein, um sich bei den gegebenen Schmelzetemperaturen und -drücken bei der Schmelzeimprägnierung bis zur Granulierung zu lösen; (b) ausreichend hoch sein, um sich beim Granulierwasserdruck und der Granuliertemperatur aus dem Polymer zu entmischen und nukleieren. In einer bevorzugten Ausführungsform ist mindestens eines der verwendeten Treibmittel bei Raumtemperatur und unter Normaldruck gasförmig.

Besonders bevorzugt wird Talkum als Nukleierungsmittel iv) in Kombination mit Stickstoff als Co-Treibmittel vb) eingesetzt.

Für den Transport und die Lagerung der expandierbaren Granulate kommen unter anderem Metallfässer und Oktabins zum Einsatz. Beim Einsatz von Fässern ist zu beachten, dass sich durch die Freisetzung der Co-Treibmittel vb) ggf. Druck im Fass aufbauen kann. Als Packmittel sind daher vorzugsweise offene Gebinde wie Oktabins oder Fässer zu verwenden, die einen Druckabbau durch Permeation des Gases aus dem Fass ermöglichen. Besonders bevorzugt sind dabei Fässer, die ein Ausdiffundieren des Co-Treibmittels vb) ermöglichen und eine Ausdiffundieren des eigentlichen Treibmittels va) minimieren bzw. verhindern. Dies kann beispielsweise durch die Abstimmung des Dichtungswerkstoffs auf das Treibmittel bzw. Co-Treibmittel vb) ermöglicht werden. Vorzugsweise ist die Permeabilität des Dichtungsmaterials für das Co-Treibmittel vb) um mindestens einen Faktor 20 höher als die Permeabilität des Dichtungsmaterials für das Treibmittel va)

Durch die Vornukleierung, beispielsweise durch Zugabe geringer Mengen an Stickstoff und Kohlendioxid, kann im expandierbaren, treibmittelhaltigen Granulat eine zelluläre Morphologie eingestellt werden. Die mittlere Zellgröße im Zentrum der Partikel ist kann dabei größer als in den Randbereichen, die Dichte ist in den Randbereichen der Partikel höher sein. Dadurch werden Treibmittelverluste soweit wie möglich minimiert.

Durch die Vornukleierung ist eine deutliche bessere Zellgrößenverteilung und einer Reduzierung der Zellgröße nach dem Vorschäumen erzielbar. Zudem ist die benötigte Menge an Treibmittel zum Erreichen einer minimalen Schüttdichte geringer und die Lagerstabilität des Materials verbessert. Geringe Mengen Stickstoff oder Kohlendioxid bei Zugabe in die Schmelze können zu einer deutlichen Verkürzung der Vorschäumzeiten bei konstantem Treibmittelgehalt bzw. zu einer deutlichen Reduzierung der Treibmittelmengen bei gleichbleibenden Schäumzeiten und minimalen Schaumdichten führen. Zudem werden durch die Vornukleierung die Produkthomogenität und die Prozessstabilität verbessert.

Eine erneute Imprägnierung der erfindungsgemäßen Polymergranulate mit Treibmitteln ist des Weiteren deutlich schneller möglich als bei Granulaten mit identischer Zusammensetzung und kompakter, d. h. nichtzellulärer Struktur. Einerseits sind die Diffusionszeiten geringer, andererseits benötigt man analog zu direkt imprägnierten Systemen geringere Treibmittelmengen für das Schäumen.

Schließlich kann durch die Vornukleierung der Treibmittelgehalt, der zur Erzielung einer gewissen Dichte erforderlich ist, reduziert und damit die Entformzeiten bei der Formteil- bzw. Blockherstellung verringert werden. Somit können die Weiterverarbeitungskosten reduziert und die Produktqualität verbessert werden.

Das Prinzip der Vornukleierung kann sowohl für die Suspension-Technologie als auch für die Schmelzeimprägnierungstechnologie zur Herstellung von expandierbaren Partikel genutzt werden. Bevorzugt wird die Anwendung im Schmelzeextrusionsverfahren, bei dem die Zugabe der Co-Treibmittel vb) durch die druckunterstützte Unterwassergranulierung nach Austritt der treibmittelbeladenen Schmelze granuliert wird. Durch Wahl der Granulierparameter und des Co-Treibmittel vb) kann die Mikrostruktur des Granulats wie oben beschrieben gesteuert werden.

Bei höheren Mengen an Co-Treibmittel vb), beispielsweise im Bereich von 1 bis 10 Gew.-% bezogen auf die treibmittelhaltige Polymerschmelze, ist eine Erniedrigung der Schmelzetempratur oder der Schmelzeviskosität und damit eine deutliche Durchsatzerhöhung möglich. Damit ist auch eine schonende Einarbeitung thermolabiler Zusatzstoffe, beispielsweise Flammschutzmittel, zur Polymerschmelze möglich. Die Zusammensetzung der expandierbaren thermoplastischen Partikel wird dadurch nicht verändert, da das Co-Treibmittel bei der Schmelzeextrusion im Wesentlichen entweicht. Zur Ausnutzung dieses Effektes wird bevorzugt CO₂ eingesetzt. Bei N₂ sind die Effekte auf die Viskosität geringer. Stickstoff wird daher vorwiegend zur Einstellung der gewünschten Zellstruktur eingesetzt.

Die flüssigkeitsgefüllte Kammer zur Granulierung der expandierbaren thermoplastischen Polymerpartikel wird bevorzugt bei einer Temperatur im Bereich von 20 bis 80°C, besonders bevorzugt im Bereich von 30 bis 60°C betrieben.

Um den thermischen Abbau der Polymilchsäure so gering wie möglich zu halten, ist es ferner zweckmäßig, den mechanischen und thermischen Energieeintrag in allen Verfahrensstufen so gering wie möglich zu halten. Die mittleren Scherraten im Schneckenkanal sollten gering sein, bevorzugt werden Scherraten unter 250/sec, bevorzugt unter 100/sec, und Temperaturen unter 260°C sowie kurze Verweilzeiten im Bereich von 2 bis 10 Minuten in den Stufen c) und d) eingehalten. Die Verweilzeiten liegen ohne Kühlschritt in der Regel bei 1,5 bis 4 Minuten und wenn ein Kühlschritt vorgesehen ist in der Regel bei 5 bis 10 Minuten. Die Polymerschmelze kann durch Druckpumpen, z. B. Zahnradpumpen gefördert und ausgetragen werden.

Die Beschichtung der Granulate erfolgt in Stufe e) mittels einer wäßrigen Dispersion von Polymilchsäure. Üblicherweise hat die wässrige Dispersion einen Feststoffanteil von 30 bis 70 Gew.-%, vorzugsweise 40 bis 60 Gew.-% und insbesondere bevorzugt von 45 bis 55 Gew.-%. Der durchschnittliche Teilchendurchmesser der Polymilchsäurepartikel in der Dispersion beträgt in der Regel 0,5 bis 5 µm und vorzugsweise 1 bis 3 µm. Beispielsweise sind wässrige Polymilchsäuredispersionen der FirmaMiyoshi Oil & Fat Co. Ltd, die unter dem Namen Landy PL-1000, 2000 oder 3000 verkauft werden. Es können auch Mischungen dieser Dispersionen aus beispielsweise 35 bis 50 Gew.-% Landy PL-1000 und 50 bis 65 Gew.-% Landy PL-3000 eingesetzt werden.

Die Beschichtung der Granulate mit der Polymilchsäure-Dispersion kann beispielsweise durch Besprühen der Granulate mit der Dispersion oder Rühren der Granulate in der Dispersion erfolgen. Die Beschichtung kann vorzugsweise bei 10 bis 80°C, insbesondere bei 20 bis 40°C und insbesondere bevorzugt bei Raumtemperatur erfolgen. In der Regel reicht eine Kontaktzeit der Granulate mit der Dispersion von wenigen Sekunden bis zu wenigen Minuten, insbesondere kleiner 10 Minuten aus.

Die erfindungsgemäßen expandierbaren Granulate weisen eine geringere Verklebung gegenüber Granulaten, die niedermolekulare Weichmacher enthalten, auf und zeichnen sich durch einen geringen Pentanverlust während der Lagerung auf.
Die erfindungsgemäßen expandierbaren Granulate können in einem ersten Schritt mittels Heißluft oder Wasserdampf zu Schaumpartikeln mit einer Dichte im Bereich von 8 bis 100 g/l vorgeschäumt und in einem 2. Schritt in einer geschlossenen Form zu Partikelformteilen verschweißt werden. Gegenüber WO 2011/086030 lassen sich die expandierbaren Granulate wesentlich besser verschweißen.

Überraschenderweise weisen die Schaumperlen gegenüber den expandierbaren Granulaten eine deutlich höhere Kristallinität auf. Die Kristallinität kann mit Hilfe der differentiellen Thermoanalyse (DSC) bestimmt werden. Die expandierbaren Granulate weisen nach der Herstellung in der Regel einen kristallinen Anteil von nur wenigen Prozent auf - sind also überwiegend amorph -, während die aufgeschäumten Perlen eine deutlich höhere Kristallinität von 8 bis 40 % und damit eine deutlich höhere Wärmeformbeständigkeit aufweisen. Überraschenderweise ist dieser Effekt bei Verwendung von Polymilchsäure-haltigen Polymeren, die 20 bis 40 Gew.-%, bezogen auf das Gesamtgewicht der Komponenten i bis iii, eines Polybutylensuccinats, Polybutylensuccinat-coadipats, Polybutylensuccinat-cosebacats, Polybutylenadipat-coterephthalats oder Polybutylensebacat-coterephthalats (Komponente ii), deutlicher ausgeprägt als bei einem Polymilchsäure-haltigen Polymer, das keine Komponente ii aufweist. Die Komponente ii) scheint einen nukleierenden Effekt auf das Polymilchsäure-haltige Polymer auszuüben. Interessanterweise wird beim Aufschäumprozess eine hohe Kristallinität der Schaumperlen erreicht ohne das Aufschäumverhalten der expandierbaren Granulate zu beeinträchtigen.

Gleichzeitig kommen Polymilchsäure-haltigen Polymeren, die 20 bis 40 Gew.-%, bezogen auf das Gesamtgewicht der Komponenten i bis iii, eines eines Polybutylensuccinats, Polybutylensuccinat-coadipats, Polybutylensuccinat-cosebacats, Polybutylenadipat-coterephthalats oder Polybutylensebacat-coterephthalats enthalten, mit wesentlich geringeren Mengen an Beschichtungsmittel aus und weisen dennoch ein exzellentes Verschweißverhalten auf. Überraschenderweise lassen sich die erfindungsgemäßen, expandierbaren Granulate, die lediglich 0,1 bis 0,45 Gew.-% amorphe Polymilchsäure enthalten, sogar besser verschweißen als die aus WO 08/130226 bekannten Granulate, die typischerweise 5 Gew.-% Beschichtungsmittel enthalten.

Zur Verbesserung der Verarbeitbarkeit können die fertigen expandierbaren Granulate weiterhin mit Glycerinester, Antistatika oder Antiverklebungsmittel beschichten werden.

Die mit dem erfindungsgemäßen Verfahren hergestellten Granulate weisen eine hohe biologische Abbaubarkeit bei gleichzeitig guten Eigenschaften beim Verschäumen sowie beim abschließenden Verschweißen zum Formteil auf.

Im Sinne der vorliegenden Erfindung ist das Merkmal "biologisch abbaubar" für einen Stoff oder ein Stoffgemisch dann erfüllt, wenn dieser Stoff oder das Stoffgemisch entsprechend DIN EN 13432 einen prozentualen Grad des biologischen Abbaus von mindestens 90% aufweist.

Im Allgemeinen führt die biologische Abbaubarkeit dazu, dass die Granulate bzw. daraus hergestellte Schäume in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise lässt man gemäß DIN EN 13432 CO₂-freie Luft durch gereiften Kompost während des Kompostierens strömen. Der Kompost wird einem definierten Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂-Freisetzung der Probe (berechnet aus dem Kohlenstoffgehalt der Probe) als prozentualer Grad des biologischen Abbaus definiert. Biologisch abbaubare Granulate zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400-4 beschrieben.

### Beispiele

### Eingesetzte Materialien:

Komponente i:
   i-1: Polymilchsäure Ingeo® 8052 D der Fa. NatureWorks.
Komponente ii:
   ii-1: Bionolle® 1903 MD, Polybutylensuccinat der Fa. Showa Denko K. K..
Komponente iii:
   iii-1: Joncryl® ADR 4368 CS der Fa. BASF B.V:.
Komponente iv:
   iv-1: HP 325 chinatalk Luzenac
Komponente v:
   va-1: Treibmittel: iso-Pentan
   vb-1: Co-Treibmittel: Stickstoff (N₂)
Komponenete vi:
   vi-1: Landy PL-2000 der Fa. Miyoshi Oil & Fat Co. Ltd., schwach alkalische, wässrige Dispersion mit einem Feststoffanteil von 40% amorpher Polymilchsäure, durchschnittliche Teilchengröße 2mm, Viskosität 1000 mPas.

### Vergleichsbeispiel 1 (nicht beschichtet):

6,7 Anteile iso-Pentan (Komponente v-1) und 0,15 Anteile Stickstoff (vi-1) wurden in eine Schmelze aus 75 Anteile Komponente i-1, 25 Anteile Komponente ii-1, 0,2 Anteile Komponente iii-1 und 0,3 Anteile Komponente iv-1 bei einer Schmelzetemperatur von 200-240°C eingemischt.
Die Schmelze wurde mit einem Durchsatz von 70 kg/h durch eine Düsenplatte mit 50 Bohrungen (Durchmesser 0,65 mm) und einer Temperatur von 260°C gefördert. Mit Hilfe einer druckbeaufschlagten und temperierten Unterwassergranulierung (20 bar, 40°C) wurden vornukleierte Granulate mit enger Granulat Größenverteilung hergestellt.

Durch Einwirkung von strömendem Wasserdampf wurden die treibmittelhaltigen Granulate zu Schaumperlen vorgeschäumt und 24 Stunden gelagert. Die Schaumperlen wurden in einem Formteilautomaten bei einem Überdruck von 0,9-1,5 bar zu einem Formteil (Platte mit einem Durchmesser von 30 Zentimeter und eine Dicke von 5 Zentimeter) verarbeitet.

An den Formteilen wurden die Biegefestigkeit und die Biegearbeit nach DIN-EN 12089 bestimmt.

### Beispiel 2: (Granulate beschichtet mit 0,25 Gew.-% amorpher Polymilchsäure)

6,7 Anteile iso-Pentan (Komponente v-1) und 0,15 Anteile Stickstoff (vi-1) wurden in eine Schmelze aus 75 Anteile Komponente i-1, 25 Anteile Komponente ii-1, 0,2 Anteile Komponente iii-1 und 0,3 Anteile Komponente iv-1 bei einer Schmelzetemperatur von 200-240°C eingemischt.

Die Schmelze wurde mit einem Durchsatz von 70 kg/h durch eine Düsenplatte mit 50 Bohrungen (Durchmesser 0,65 mm) und einer Temperatur von 260°C gefördert. Mit Hilfe einer druckbeaufschlagten und temperierten Unterwassergranulierung (20 bar, 40°C) wurden vornukleierte Granulate mit enger Granulat Größenverteilung hergestellt. 0,25 Gew.-% Komponente vi-1, bezogen auf den Feststoffgehalt der Dispersion, wurde auf die hergestellten Granulate durch Rühren bei Raumtemperatur während 3 Minuten aufgetragen.

Durch Einwirkung von strömendem Wasserdampf wurden die treibmittelhaltigen Granulate zu Schaumperlen vorgeschäumt und 24 Stunden gelagert. Die Schaumperlen wurden in einem Formteilautomaten bei einem Überdruck von 0,9-1,5 bar zu einem Formteil (Platte mit einem Durchmesser von 30 Zentimeter und eine Dicke von 5 Zentimeter) verarbeitet.

An den Formteilen wurden die Biegefestigkeit und die Biegearbeit nach DIN-EN 12089 bestimmt.

### Vergleichsbeispiel 3 (beschichtet mit 0,5 Gew.-% amorpher Polymilchsäure):

6,7 Anteile iso-Pentan (Komponente v-1) und 0,15 Anteile Stickstoff (vi-1) wurden in eine Schmelze aus 75 Anteile Komponente i-1, 25 Anteile Komponente ii-1, 0,2 Anteile Komponente iii-1 und 0,3 Anteile Komponente iv-1 bei einer Schmelzetemperatur von 200-240°C eingemischt.
Die Schmelze wurde mit einem Durchsatz von 70 kg/h durch eine Düsenplatte mit 50 Bohrungen (Durchmesser 0,65 mm) und einer Temperatur von 260°C gefördert. Mit Hilfe einer druckbeaufschlagten und temperierten Unterwassergranulierung (20 bar, 40°C) wurden vornukleierte Granulate mit enger Granulat Größenverteilung hergestellt.

0,5 Gew.-% Komponente vi-1, bezogen auf den Feststoffgehalt der Dispersion, wurde auf die hergestellten Granulate durch Rühren bei Raumtemperatur während 3 Minuten aufgetragen.

Durch Einwirkung von strömendem Wasserdampf wurden die treibmittelhaltigen Granulate zu Schaumperlen vorgeschäumt und 24 Stunden gelagert. Die Schaumperlen wurden in einem Formteilautomaten bei einem Überdruck von 0,9-1,5 bar zu einem Formteil (Platte mit einem Durchmesser von 30 Zentimeter und eine Dicke von 5 Zentimeter) verarbeitet.

An den Formteilen wurden die Biegefestigkeit und die Biegearbeit nach DIN-EN 12089 bestimmt.

| Beispiele | V-1 | 2 | V3 |
|---|---|---|---|
| Komponente i-1 | 75 | 75 | 75 |
| Komponente ii-1 | 25 | 25 | 25 |
| Komponente iii-1 | 0,2 | 0,2 | 0,2 |
| Komponente iv-1 | 0,3 | 0,3 | 0,3 |
| Komponente va-1 | 6,7 | 6,7 | 6,7 |
| Komponente vb-1 | 0,15 | 0,15 | 0,15 |
| Komponente vi-1 | 0 | 0,25 | 0,5 |
| Durchsatz (kg/h) | 70 | 70 | 70 |
| Schüttdichte Rohperle (kg/m³) | 694,0 | 695,8 | 697,5 |
| Dichte Platte (kg/m³) | 24 | 26 | 26 |
| Biegearbeit nach DIN-EN12089 (J/(kg/m³)) | 0,10 | 0,14 | 0,12 |

## Patentansprüche

1. Verfahren zur Herstellung von expandierbaren Polymilchsäure-haltigen Granulaten mit einer Schüttdichte von 500 bis 800 kg/m³, umfassend die Schritte:
a) Aufschmelzen und Einmischen der Komponenten i) 59.9 bis 79,9 Gew.-%, bezogen auf das Gesamtgewicht der Komponenten i bis iii, Polymilchsäure, ii) 20 bis 40 Gew.-%, bezogen auf das Gesamtgewicht der Komponenten i bis iii, eines Polybutylensuccinats, Polybutylensuccinat-coadipats, Polybutylensuccinat-cosebacats, Polybutylenadipat-coterephthalats oder Polybutylensebacat-coterephthalats iii) 0,1 bis 2 Gew.-%, bezogen auf das Gesamtgewicht der Komponenten i bis iii, eines Kettenverlängerers und iv) 0 bis 10 Gew.-%, bezogen auf das Gesamtgewicht der Komponenten i bis iii, eines oder mehrerer Additive,
b) Einmischen v) 3 bis 7 Gew.-%, bezogen auf das Gesamtgewicht der Komponenten i bis iv, eines physikalischen Treibmittels in die Polymerschmelze mittels eines statischen oder dynamischen Mischers bei einer Temperatur von mindestens 140°C,
c) Austrag durch eine Düsenplatte mit Bohrungen, deren Durchmesser am Düsenaustritt höchstens 1,5 mm beträgt und
d) Granulieren der treibmittelhaltigen Schmelze direkt hinter der Düsenplatte unter Wasser bei einem Druck im Bereich von 1 bis 25 bar und
e) Beschichten der so erhaltenen Granulate vi) mit 0,1 bis 0,45 Gew.-%, bezogen auf das Gesamtgewicht der Granulate, amorpher Polymilchsäure, die mittels einer wässrigen Dispersion auf die Granulate aufgebracht wird.

2. Verfahren nach Anspruch 1, **dadurch gekennzeichnet, dass** als Polymilchsäurehaltiges Polymer in Stufe a) eine Mischung aus
i) 59.9 bis 79,9 Gew.-%, bezogen auf das Gesamtgewicht der Komponenten i bis iii, Polymilchsäure,
ii) 20 bis 40 Gew.-%,, bezogen auf das Gesamtgewicht der Komponenten i bis iii, eines Polyesters ii enthaltend:
a) 90 bis 100 mol %, bezogen auf die Komponenten a und b, Bernsteinsäure;
b) 0 bis 10 mol %, bezogen auf die Komponenten a und b, Adipinsäure oder Sebazinsäure;
c) 98 bis 102 mol %, bezogen auf die Komponenten a und b, 1,4-Butandiol; und
d) 0,00 bis 2 Gew.-%, bezogen auf das Gesamtgewicht der Komponenten a bis c, eines Kettenverlängerers und /oder Verzweigers ausgewählt aus der Gruppe bestehend aus: einem di oder polyfunktionellen Isocyanat, Isocyanurat, Oxazolin , Epoxid, Peroxid, Carbonsäureanhydrid und /oder eines mindestens trifunktionellen Alkohols oder einer mindestens trifunktionellen Carbonsäure;
v) 0,1 bis 2 Gew.-%, bezogen auf das Gesamtgewicht der Komponenten i bis iii, eines Epoxidgruppen-haltigen Copolymers auf Basis Styrol, Acrylsäureester und/oder Methacrylsäureester, und
iv) 0,1 bis 1 Gew.-%, bezogen auf das Gesamtgewicht der Komponenten i bis ii, eines Nukleierungsmittels;
hergestellt wird.

3. Verfahren nach den Ansprüchen 1 oder 2, **dadurch gekennzeichnet, dass** in Stufe e) die amorphe Polymilchsäure vi eine Partikelgröße von 0,2 bis 5 µm und einen D-Milchsäure-Anteil von10% bis 18%, bezogen auf die zur Beschichtung verwendete Polymichsäure, eingesetzt wird.

4. Verfahren nach den Ansprüchen 1 bis 3, **dadurch gekennzeichnet, dass** als physikalisches Treibmittel in Stufe b) iso-Pentan eingesetzt wird.

5. Verfahren nach Anspruch 4, **dadurch gekennzeichnet, dass** als Treibmittel in Stufe b) als physikalisches Treibmittel eine Mischung aus va) 1 bis 7 Gew.-%, bezogen auf das Gesamtgewicht der Komponenten i bis iv, iso-Pentan und vb) 0,01 bis 5 Gew.-% eines Co-Treibmittels - ausgewählt aus der Gruppe Stickstoff, Kohlendioxid, Argon, Helium oder Mischungen davon, eingesetzt wird.

6. Verfahren nach Anspruch 5, **dadurch gekennzeichnet, dass** die Unterwassergranulierung in Stufe d) bei 20 bis 80 °C durchgeführt wird.

7. Expandierbare Schaumstoffpartikel, erhältlich gemäß einem Verfahren der Ansprüche 1 bis 6.

8. Verfahren zur Herstellung von Partikelschaumformteilen, **dadurch gekennzeichnet, dass** man expandierbare Polymilchsäure-haltige Granulate gemäß Anspruch 7 in einem ersten Schritt mittels Heißluft oder Wasserdampf zu Schaumpartikeln mit einer Dichte im Bereich von 8 bis 100 kg/m³ vorschäumt und in einem zweiten Schritt in einer geschlossenen Form verschweißt.

9. Verwendung der expandierbaren Polymilchsäure-haltigen Granulate gemäß Anspruch 7 zur Herstellung von Fleisch-, Fisch-, Wurst,- und Suppenschalen, Getränkebecher, Verpackung von Lebensmitteln, Elektro-Artikel, zur Isolierung in der Bauindustrie und zur Schock- und Schallabsorption.

## Claims

1. A process for the production of expandable pellets with bulk density from 500 to 800 kg/m³ comprising polylactic acid, comprising the following steps:
a) melting and incorporation by mixing of the following components:
i) from 59.9 to 79.9% by weight, based on the total weight of components i to iii, of polylactic acid,
ii) from 20 to 40% by weight, based on the total weight of components i to iii, of a polybutylene succinate, polybutylene succinate-co-adipate, polybutylene succinate-co-sebacate, polybutylene adipate-co-terephthalate, or polybutylene sebacate-co-terephthalate, iii) from 0.1 to 2% by weight, based on the total weight of components I to iii, of a chain extender, and iv) from 0 to 10% by weight, based on the total weight of components i to iii, of one or more additives,
b) incorporation by mixing of v) from 3 to 7% by weight, based on the total weight of components i to iv, of a physical blowing agent into the polymer melt by means of a static or dynamic mixer at a temperature of at least 140°C,
c) discharge through a die plate with holes, the diameter of which at the exit from the die is at most 1.5 mm, and
d) underwater pelletization of the melt comprising blowing agent directly downstream of the die plate at a pressure in the range from 1 to 25 bar, and
e) coating of the resultant pellets vi) with from 0.1 to 0.45% by weight, based on the total weight of the pellets, of amorphous polylactic acid, which is applied to the pellets by means of an aqueous dispersion.

2. The process according to claim 1, wherein polymer produced comprising polylactic acid in stage a) comprises a mixture of
i) from 59.9 to 79.9% by weight, based on the total weight of the components i to iii, of polylactic acid,
ii) from 20 to 40% by weight, based on the total weight of components i to iii, of a polyester ii comprising:
a) from 90 to 100 mol%, based on components a and b, of succinic acid;
b) from 0 to 10 mol%, based on components a and b, of adipic acid or sebacic acid;
c) from 98 to 102 mol%, based on components a and b, of 1,4-butanediol; and
d) from 0.00 to 2% by weight, based on the total weight of components a to c, of a chain extender and/or branching agent selected from the group consisting of: a di- or polyfunctional isocyanate, isocyanurate, oxazoline, epoxide, peroxide, carboxylic anhydride, and/or an at least trihydric alcohol, or an at least tribasic carboxylic acid;
v) from 0.1 to 2% by weight, based on the total weight of components i to iii, of a copolymer which comprises epoxy groups and which is based on styrene, acrylate, and/or methacrylate, and
iv) from 0.1 to 10% by weight, based on the total weight of components i to ii, of a nucleating agent.

3. The process according to claim 1 or 2, wherein in stage e) the particle size is used of the amorphous polylactic acid vi) is from 0.2 to 5 µm and the proportion of D-lactic acid therein is from 10% to 18%, based on the polylactic acid used for the coating.

4. The process according to claims 1 to 3, wherein physical blowing agent used in stage b) comprises isopentane.

5. The process according to claim 4, wherein blowing agent used in stage b) as physical blowing agent comprises a mixture of va) from 1 to 7% by weight, based on the total weight of components i to iv, of isopentane and vb) from 0.01 to 5% by weight of a co-blowing agent selected from the group of nitrogen, carbon dioxide, argon, helium and mixtures thereof.

6. The process according to claim 5, wherein the underwater pelletization in stage d) is carried out at from 20 to 80°C.

7. An expandable foam-bead material obtainable according to a process of claims 1 to 6.

8. A process for the production of molded foams which comprises, in a first step, using hot air or steam to prefoam expandable pellets comprising polylactic acid according to claim 7 to give foam beads of density in the range from 8 to 100 kg/m³ and, in a second step, fusing same in a closed mold.

9. The use of the expandable pellets comprising polylactic acid according to claim 7 for the production of trays for meat, fish, sausage, or soup, cups, food packaging, or electrical items, for insulation in the construction industry, or for shock-absorption and sound-deadening.

## Revendications

1. Procédé de fabrication de granulats expansibles contenant de l'acide polylactique, ayant une densité apparente de 500 à 800 kg/m³, comprenant les étapes suivantes :
a) la fusion et le mélange des composants i) 59,9 à 79,9 % en poids, par rapport au poids total des composants i à iii, d'acide polylactique, ii) 20 à 40 % en poids, par rapport au poids total des composants i à iii, d'un polysuccinate de butylène, d'un polysuccinate-co-adipate de butylène, d'un polysuccinate-co-sébacate de butylène, d'un polyadipate-co-téréphtalate de butylène ou d'un polysébacate-co-téréphtalate de butylène, iii) 0,1 à 2 % en poids, par rapport au poids total des composants i à iii, d'un allongeur de chaînes, et iv) 0 à 10 % en poids, par rapport au poids total des composants i à iii, d'un ou de plusieurs additifs,
b) l'incorporation de v) 3 à 7 % en poids, par rapport au poids total des composants i à iv, d'un agent gonflant physique dans la masse fondue de polymère au moyen d'un mélangeur statique ou dynamique à une température d'au moins 140 °C,
c) le déchargement au travers d'une plaque à buses munie d'alésages dont le diamètre à la sortie des buses est d'au plus 1,5 mm, et
d) la granulation de la masse fondue contenant un agent gonflant directement après la plaque à buses sous l'eau à une pression dans la plage allant de 1 à 25 bar, et
e) le revêtement des granulats ainsi obtenus vi) avec 0,1 à 0,45 % en poids, par rapport au poids total des granulats, d'acide polylactique amorphe, qui est appliqué sur les granulats au moyen d'une dispersion aqueuse.

2. Procédé selon la revendication 1, **caractérisé en ce qu'**un mélange de
i) 59,9 à 79,9 % en poids, par rapport au poids total des composants i à iii, d'acide polylactique,
ii) 20 à 40 % en poids, par rapport au poids total des composants i à iii, d'un polyester ii contenant :
a) 90 à 100 % en moles, par rapport aux composants a et b, d'acide succinique ;
b) 0 à 10 % en moles, par rapport aux composants a et b, d'acide adipique ou d'acide sébacique ;
c) 98 à 102 % en moles, par rapport aux composants a et b, de 1,4-butanediol ; et
d) 0,00 à 2 % en poids, par rapport au poids total des composants a à c, d'un allongeur de chaînes et/ou d'un agent de ramification choisis dans le groupe constitué par : un isocyanate di- ou polyfonctionnel, un isocyanurate, une oxazoline, un époxyde, un peroxyde, un anhydride d'acide carboxylique et/ou un alcool au moins trifonctionnel ou un acide carboxylique au moins trifonctionnel ;
v) 0,1 à 2 % en poids, par rapport au poids total des composants i à iii, d'un copolymère contenant des groupes époxyde à base de styrène, d'un ester de l'acide acrylique et/ou d'un ester de l'acide méthacrylique, et iv) 0,1 à 1 % en poids, par rapport au poids total des composants i à ii, d'un agent de nucléation ;
est fabriqué en tant que polymère contenant de l'acide polylactique à l'étape a).

3. Procédé selon les revendications 1 ou 2, **caractérisé en ce qu'**à l'étape e), l'acide polylactique amorphe vi est utilisé une taille de particule de 0,2 à 5 µm et une proportion d'acide D-lactique de 10 % à 18 %, par rapport à l'acide polylactique utilisé pour le revêtement.

4. Procédé selon les revendications 1 à 3, **caractérisé en ce que** de l'iso-pentane est utilisé en tant qu'agent gonflant physique à l'étape b).

5. Procédé selon la revendication 4, **caractérisé en ce qu'**un mélange de va) 1 à 7 % en poids, par rapport au poids total des composants i à vi, d'iso-pentane et vb) 0,01 à 5 % en poids d'un co-agent gonflant, choisi dans le groupe constitué par l'azote, le dioxyde de carbone, l'argon, l'hélium ou leurs mélanges, est utilisé en tant qu'agent gonflant à l'étape b) en tant qu'agent gonflant physique.

6. Procédé selon la revendication 5, **caractérisé en ce que** la granulation sous l'eau à l'étape d) est réalisée à une température de 20 à 80 °C.

7. Particules de mousse expansibles, pouvant être obtenues par un procédé selon les revendications 1 à 6.

8. Procédé de fabrication de pièces moulées en mousse particulaire, **caractérisé en ce que** des granulats expansibles contenant de l'acide polylactique selon la revendication 7 sont pré-moussés lors d'une première étape au moyen d'air chaud ou de vapeur d'eau pour former des particules de mousse ayant une densité dans la plage allant de 8 à 100 kg/m³, et soudés lors d'une deuxième étape dans un moule fermé.

9. Utilisation des granulats expansibles contenant de l'acide polylactique selon la revendication 7 pour la fabrication de barquettes pour de la viande, du poisson, des saucisses et des soupes, de gobelets à boisson, d'emballages de produits alimentaires, d'articles électroniques, pour l'isolation dans l'industrie du bâtiment et pour l'absorption des chocs et acoustique.
